# EUROPÄISCHE PATENTANMELDUNG

(11) **EP 0 725 048 A2**
(43) Veröffentlichungstag der Anmeldung: **07.08.1996**
(21) Anmeldenummer: 96101476.8
(22) Anmeldetag: 02.02.1996
(51) Int. Cl.: C04B 40/06, C04B 26/02

(54) **Verfahren zur Herstellung und Einbringung von zweikomponentigen Mörtelsystemen sowie Mittel zur Durchführung des Verfahrens**

(30) Priorität: 03.02.1995 DE 19503481
(71) Anmelder: Gesellschaft für technische Kunststoffe Gebr. von der Wettern mbH, 53359 Rheinbach-Flerzheim (DE)
(72) Erfinder: Harzheim, Rainer, D-53881 Euskirchen (DE)
(74) Vertreter: Werner, Hans-Karsten, Dr.Dipl.-Chem.

(57) **Zusammenfassung**

Das Verfahren zur Herstellung und Einbringung von zweikomponentigen Mörtelsystemen mit Mineralstoffen, insbesondere in Pflasterfugen durch werkseitige Vermischung der Mineralstoffe mit dem Bindemittel erfolgt dadurch, daß die erste Bindemittelkomponente werkseitig nur mit etwa der Hälfte der Mineralstoffe vermischt wird und die verbleibende Hälfte der Mineralstoffe werkseitig mit der zweiten Bindemittelkomponente vermischt wird und am Ort der Verarbeitung die beiden Gemische etwa im Verhältnis 1:1, gegebenfalls unter Zusatz von Wasser, intensiv vermischt und weiterverarbeitet werden.

## Beschreibung

Gegenstand der vorliegenden Erfindung ist ein Verfahren zur Herstellung und Einbringung von zweikomponentigen Mörtelsystemen mit Mineralstoffen, insbesondere in Pflasterfugen durch werkseitige Vermischung der Mineralstoffe mit dem Bindemittel sowie Mittel zur Durchführung des Verfahrens.

Derartige Mörtelsysteme sind bekannt und bestehen bisher aus einem werkseitig gefertigten Gemisch der Mineralstoffe mit einer ersten Bindemittelkomponente sowie einer in flüssiger Form mitgelieferten zweiten Bindemittelkomponente, zum Beispiel einer Härterkomponente. Diese Komponente wird in Blechgebinde, Polyethylenflaschen oder Polyethylenbeutel abgefüllt und dem werkseitig hergestellten Gemisch erst am Ort der Verarbeitung zugegeben. Es gibt inzwischen auch Mörtelsysteme, bei denen werkseitig die Mineralstoffe mit der zweiten Bindemittelkomponente vorgemischt werden und bei denen die erste Bindemittelkomponente in flüssiger Form in Blechgebinden, Polyethylenflaschen oder Polyethylenbeuteln abgefüllt mitgeliefert wird. Schließlich gibt es Systeme, bei denen Mineralstoffe, erste Bindemittelkomponente und zweite Bindemittelkomponente (z.B. ein Härter) als drei separate Komponenten geliefert, erst am Ort der Verarbeitung zusammengemischt und dann weiterverarbeitet werden. Sofern es sich bei den Bindemittelkomponenten und Härterkomponenten um mit Wasser emulgierbare Systeme handelt, wird meistens bei der Verarbeitung noch zusätzlich etwas Wasser beigemischt, um das Gemisch geschmeidiger und leichter verarbeitbar zu machen.

Nachteil der bisherigen Systeme ist, daß am Ort der Verarbeitung die gebrauchten Blechgebinde, Polyethylenflaschen oder Polyethylenbeutel mit Restanhaftungen als Sondermüll entsorgt werden müssen. Ein weiterer Nachteil besteht darin, daß am Ort der Verarbeitung die vorgemischten Mineralstoffe exakt abgewogen und die noch fehlende Komponente genau dosiert zugemischt werden müssen. Ein weiterer Nachteil besteht darin, daß es bei derartigen Systemen gelegentlich vorkommt, daß durch überdosiertes Wasser die zweite Komponente aus den oberen Schichten ausgespült wird, so daß gerade diese bei Pflasterfugen besonders beanspruchten Schichten schlechter und schwächer abbinden und somit einem erhöhten Verschleiß ausgesetzt sind.

Die DE-A-38 00 957 beschreibt härtbare Mörtelmassen mit einem Gehalt an Vinylestern und nur gegebenenfalls anderen Bestandteilen wie Lösungsmitteln, Füll- und Streckmitteln, Reaktivverdünnern, Viskositätsverbesserern, Thixotropiermitteln und dergleichen, welche zusätzlich Furfural und/oder Furfural-Derivate enthalten. Diese Mörtelmassen werden benötigt zur Befestigung von Ankerstangen in Bohrlöchern. Der Zusatz von Furfural und/oder Furfural-Derivaten erfolgt zur Erhöhung der Lagerstabilität. Als Füllstoff wird auch Quarzsand verwendet. Aus dem Beispiel der DE-A-38 00 957 geht hervor, daß der Quarzsand in der Komponente A nur 54,75 Teile und in der Komponente B nur 60 Teile ausmacht. Die Komponenten A und B werden dann im Verhältnis 7:1 Raum/Gewichtsteilen vermischt. Im fertig abgebundenen Reaktionsharz ist der Quarzsand ein Füllstoff, welcher allseitig mit ausgehärtetem Harz umgeben ist und in diesem eingebettet wird. Die Komponenten A und B sind somit zwei Pasten, die miteinander verrührt werden, um miteinander zu reagieren.

Die DE-A-38 12 814 beschreibt die Verwendung verschäumbarer, radikalisch härtbarer Zweikomponenten-Reaktionsharze als Mörtelmasse zur Befestigung von Ankerstangen und dergleichen Verankerungsmitteln in Bohrlöchern. Auch hier dienen das Quarzmehl und sonstige Komponenten als Füllstoffe, welche die Verarbeitung erleichtern. All diese Füllstoffe sind im abgebundenen Zustand vollständig eingebettet in das ausreagierte Harz. Zusätzlich weist dieses ausreagierte Harz Gasblasen auf, d.h. es entsteht ein Schaum. Ein derartiger Schaum ist als Fugenmörtel für Pflasterfugen ungeeignet. Es ist notwendig, die Komponenten A und B im Verhältnis 1:7 bzw. 1:9 zu mischen, um zu brauchbaren Produkten zu kommen. Diese kompliziert abzumessenden Mengen mögen zumutbar sein für ein Material zum Befestigen von Ankerstangen in Bohrlöchern. Unzumutbar und unpraktisch sind derartige Mengenverhältnisse bei der Herstellung eines Pflasterfugenmörtels, von dem verlangt wird, daß er eine gleichmäßige Festigkeit aufweist und dennoch porös genug bleibt, um Oberflächenwasser durchsickern zu lassen.

Die vorliegende Erfindung hat sich die Aufgabe gestellt, das Verfahren zur Herstellung und Einbringung von zweikomponentigen Mörtelsystemen insbesondere in Pflasterfugen sicherer, einfacher, preiswerter und umweltfreundlicher zu gestalten und dabei obendrein die Qualität der abgebundenen Mörtelsysteme zu verbessern und sicherer zu gestalten.

Diese Aufgabe kann überraschend einfach dadurch gelöst werden, daß die erste Bindemittelkomponente werkseitig nur mit etwa der Hälfte der Mineralstoffe vermischt wird und die verbleibende Hälfte der Mineralstoffe werkseitig mit der zweiten Bindemittelkomponente vermischt wird und erst am Ort der Verarbeitung die beiden Gemische etwa im Verhältnis 1:1, gegebenfalls unter Zusatz von Wasser, intensiv vermischt und weiterverarbeitet werden. Die Dosierung und Vermischung etwa im Verhältnis 1:1 am Ort der Verarbeitung ist wesentlich leichter und einfacher und erfordert weder genaues Wiegen noch genaues Dosieren von Flüssigkeiten. Das Verhältnis 1:1 der beiden Gemische kann volumetrisch oder gravimetrisch bestimmt, aber auch mit ausreichender Genauigkeit geschätzt werden. Überraschenderweise wird durch intensives Vermischen der beiden Gemische am Ort der Verarbeitung eine wesentlich bessere und gleichmäßigere Vermischung der beiden Komponenten etwa im Verhältnis 1:1 erreicht als bei der herkömmlichen Methode. Sofern bei mit Wasser emulgierbaren Systemen zur Erhöhung der Geschmeidigkeit Wasser zugegeben wird, läßt sich dieses gut und leicht mit einmischen, ohne daß es zu Entmischungen der beiden Bindemittelkomponenten kommt. Erfindungsgemäß erhält man somit zuverlässig insbesondere auch an der Oberfläche gut aushärtende Pflasterfugen und durchgehend abbindende Systeme. Insbesondere, wenn bei der Verarbeitung nur Teile der werkseitig vorbereiteten Gebinde von Gemischen benötigt werden, können diese Teilmengen problemlos miteinander vermischt und verarbeitet werden. Es entfällt die bisher notwendige Entsorgung der gebrauchten Blechgebinde, Polyethylenflaschen oder Polyethylenbeutel mit Restanhaftungen als Sondermüll. Die Einhaltung von abgewogenen Mineralstoffgemischen mit der zweiten Komponente, beispielsweise im Verhältnis 1:0,35, entfällt. Die beiden separat hergestellten und aufbewahrten und zum Ort der Verarbeitung transportierten Gemische aus Mineralstoffen und erster Bindemittelkomponente bzw. Mineralstoffen und zweiter Bindemittelkomponente sind leicht in entsprechende gleich große Gebinde abfüllbar, die nur äußerlich entsprechend gekennzeichnet sein sollten. Es ist dann ohne weiteres möglich, die Verarbeitung durch angelernte Arbeitskräfte durchzuführen, die nicht qualifiziert genug sind, genaue Dosierungen durchzuführen.

Das neue Mittel ist somit leichter zu lagern und zu handhaben und liefert dennoch zuverlässig reproduzierbar gute Ergebnisse. Dies war nicht vorhersehbar, da die Umsetzung der Komponenten A und B zum abgebundenen Reaktionsharzsystem bei der Anwendung nur an den Stellen erfolgt, an denen die umhüllten Quarzkörner aneinanderstoßen. Der abgebundene Fugenmörtel bleibt somit ein poröses, wasserdurchlässiges System, durch welches vorzugsweise Oberflächenwasser hindurchsickern kann. Dazu ist es aber notwendig, daß sich die Komponenten A und B jede für sich dazu eignen, im nicht reagierten Zustand die Körner eines Quarzsandes zu umhüllen, ohne sich von ihnen zu lösen. Unterschüssige Mengen auch nur einer Komponente führen zu einer ungenügenden Verklebung der Quarzsandkörner. Überdosierung auch nur einer Komponente führt während der Lagerung bis zur Anwendung zur Entmischung und damit wiederum zu ungleichmäßiger und ungenügender Verklebung der Quarzkörner miteinander zu den gewünschten Pflasterfugen.

## Patentansprüche

1. Verfahren zur Herstellung und Einbringung von zweikomponentigen Mörtelsystemen mit Mineralstoffen, insbesondere in Pflasterfugen durch werkseitige Vermischung der Mineralstoffe mit dem Bindemittel, dadurch gekennzeichnet, daß die erste Bindemittelkomponente werkseitig nur mit etwa der Hälfte der Mineralstoffe vermischt wird und die verbleibende Hälfte der Mineralstoffe werkseitig mit der zweiten Bindemittelkomponente vermischt wird und am Ort der Verarbeitung die beiden Gemische etwa im Verhältnis 1:1, gegebenfalls unter Zusatz von Wasser, intensiv vermischt und weiterverarbeitet werden.

2. Mittel zur Einbringung von zweikomponentigen Mörtelsystemen mit Mineralstoffen, insbesondere in Pflasterfugen, bestehend aus einem Teil Mineralstoffe, der werkseitig mit der ersten Bindemittelkomponente vermischt ist, und einem Teil Mineralstoffe, der werkseitig mit der zweiten Bindemittelkomponente vermischt ist, wobei die beiden Teile Mineralstoff/Bindemittelkomponente getrennt hergestellt und zur Verfügung gestellt werden.
